(19) **Europäisches Patentamt / European Patent Office / Office européen des brevets**

(11) **EP 2 743 657 B1**

(12) # EUROPEAN PATENT SPECIFICATION

(45) Date of publication and mention
of the grant of the patent:
**02.03.2016 Bulletin 2016/09**

(51) Int Cl.:
*G01J 3/02* (2006.01)

(21) Application number: **12306582.3**

(22) Date of filing: **13.12.2012**

(54) **Method for controlling an image display device to allow an observer to perceive colours as another observer**

Verfahren zur Steuerung einer Bildanzeigevorrichtung um zu ermöglichen, dass ein Beobachter Farben wahrnehmen kann wie ein anderer Beobachter

Procédé pour commander un dispositif d'affichage d'image permettant à un observateur de percevoir les couleurs comme un autre observateur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.06.2014 Bulletin 2014/25**

(73) Proprietor: **Thomson Licensing
92130 Issy-les-Moulineaux (FR)**

(72) Inventors:
• **Stauder, Jurgen**
  **35576 Cesson-Sévigné (FR)**
• **Blondé, Laurent**
  **35576 Cesson-Sévigné (FR)**
• **Morvan, Patrick**
  **35576 Cesson-Sévigné (FR)**

(74) Representative: **Vidon Brevets & Stratégie
16B, rue de Jouanet
BP 90333
35703 Rennes Cedex 7 (FR)**

(56) References cited:
**EP-A1- 2 472 875       US-A1- 2011 026 052**

• LI LIU: "Optimization of color reproduction based on chromatic properties of multiple real observers", BIO-INSPIRED COMPUTING: THEORIES AND APPLICATIONS (BIC-TA), 2010 IEEE FIFTH INTERNATIONAL CONFERENCE ON, IEEE, PISCATAWAY, NJ, USA, 23 September 2010 (2010-09-23), pages 985-988, XP031808030, DOI: 10.1109/BICTA.2010.5645124 ISBN: 978-1-4244-6437-1
• RAMANATH R: "Minimizing observer metamerism in display systems", COLOR RESEARCH & APPLICATION, JOHN WILEY & SONS, INC, US, vol. 34, no. 5, 1 October 2009 (2009-10-01), pages 391-398, XP002594590, ISSN: 0361-2317
• SARKAR A. ET AL: "STUDY OF OBSERVER VARIABILITY IN MODERN DISPLAYCOLORIMETRY: AN ANALYSIS OF CIE 2006 MODEL", HAL - Hyper Article en Ligne 11th Congress of the International Colour Association (AIC), Sydney, 17 July 2009 (2009-07-17), pages 1-4, XP002696351, Retrieved from the Internet: URL:http://hal.archives-ouvertes.fr/docs/0 0/39/43/75/PDF/CIE06Analysis_AIC09_Paper1_ Final.pdf [retrieved on 2013-05-03]

EP 2 743 657 B1

**Description**

Technical Field

The invention relates to a method for controlling an image display device to allow an observer to perceive colours as another observer.

Background Art

Various recent studies have shown that variations in observers' colour vision characteristics can be a significant issue in modern display colourimetry, since peaky colour primaries (commonly red, green and blue) are often used to achieve more vivid and saturated colours. This is true notably for human observers who will not see the same colour on a screen. However, the same problem occurs for other type of observers such as electronic or argentic cameras, images scanners, and in general any other spectral-sentitive apparatus or method.

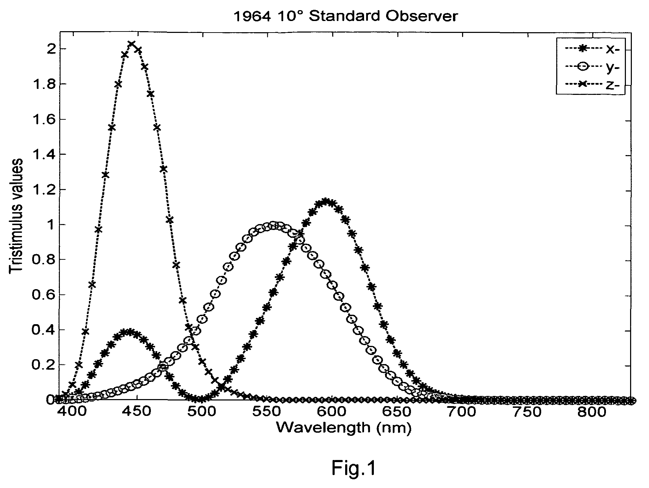

The colour matching functions are very well known as the numerical description of the chromatic response of an observer. The CIE has defined a set of three colour-matching functions ("CMF"), called $\bar{x}(\lambda)$, $\bar{y}(\lambda)$, and $\bar{z}(\lambda)$, which can be thought of as the spectral sensitivity curves of three linear light detectors that yield the tristimulus values X, Y, and Z in the CIE XYZ linear visual colour space. There are two sets of standard observer CMFs, depending on the field of view : CIE-1964 10° or CIE-1931 2°. As illustrated on figure 1 for CIE-1964 10°, these three CMF functions are respectively for the long-, medium- and short- wavelength range.

According to basic colorimetry, the tristimulus values (X,Y,Z) as expressed in the CIE-XYZ 1931 color space, of a color of an object as perceived by a so-called CIE 1931 standard observer are obtained by the integration of the spectral power distribution of a light source ($S_\lambda$), the reflectance factor of the object ($R_\lambda$), and the color matching functions of an average, standard observer ($\bar{x}_\lambda$, $\bar{y}_\lambda$ and $\bar{z}_\lambda$). If k is a normalization factor that assigns the luminance of white an arbitrary value of 100, we have the following definitions:

$$X = k\sum_{\lambda} S_\lambda R_\lambda \bar{x}_\lambda \Delta\lambda; \quad Y = k\sum_{\lambda} S_\lambda R_\lambda \bar{y}_\lambda \Delta\lambda; \quad Z = k\sum_{\lambda} S_\lambda R_\lambda \bar{z}_\lambda \Delta\lambda$$

$$k = \frac{100}{\sum_{\lambda} S_\lambda \bar{y}_\lambda \Delta\lambda}$$

Since the tristimulus values (X,Y,Z) are computed by wavelength-wise integration, two colour tristimuli with very different spectral power distribution can give rise to identical visual response for a given observer, leading to a "metameric" colour match or "metameric" colour pair. Such a match established by one observer can, and quite often does, lead to a mismatch for a different observer, as the second observer is visually characterized by a set of CMFs that is different from the former. This phenomenon is commonly termed as observer metamerism.

Various recent studies have shown that observer variability can be a significant issue notably in modern display colourimetry. The single set of three CMFs from the CIE 1931 standard observer can often be unacceptably different from the actual set of CMFs of an individual observer or the actual averaged CMFs from a group of observers, and vice versa. In recent studies, the mean and maximum values of the standard observer-predicted colour difference between individual observer metameric colour matches were found to be as high as 1.4 and 3.3 $\Delta E^*_{00}$ respectively, as expressed in the CIE Lab color space.

In 1989, the CIE published a report providing a method for evaluating the average values and the range of colour mismatch for a metameric colour pair when an actual human observer with normal colour vision is substituted for the so-called standard observer of the CIE. Four sets of deviation functions were proposed to characterize the tolerance ellipsoid of colour mismatch resulting from observer metamerism. This method can be used to derive an observer metamerism index, but it does not attempt to derive new sets of CMFs. Further, this method significantly under-predicts observer variability, and was never adopted by the industry.

By classifying a combined dataset of 47 actual observer CMFs and 61 simulated CMFs obtained from the recent CIE 2006 model (i.e. 108 CMFs in all) using standard mathematical cluster analysis methods (*Partitioning method*, also known as *K-means method*), an optimal number of five different sets of CMFs (each set for each of long-, medium- and short- wavelength range as described above) were found, achieving close to 1 unit of average color difference

($\Delta E^*_{00}$) in the LAB color space in predicting a standard set of colors for all observers. Combining the long-, medium- and short- wavelength range provides 125 trichromatic CMFs, which were reduced to seven relevant observer categories by a ranking and sorting procedure. Instead of having a single standard observer, there are now seven different classes of observers.

There is a workflow in imaging called "proof viewing" that poses a problem with respect to observer variability, that the invention proposes to solve.

Proof viewing is the visual perception and inspection by a human observer of the reproduction of an image. Image reproductions can be an image shown on a direct view display device, an image printed on a paper or any other means of image reproduction. Within proof viewing, we address the visual inspection of the reproduction of colors in the image. One well-known example is proof viewing is desktop publishing. While producing an image for a final color reproduction on a printing device, the operator proof views the color on a direct view display device that is expected to reproduce the same colors as the printing device. The image on the direct display device is called proof view. Another workflow is proof viewing of video content on a studio monitor which reproduce images according to a color reproduction standard such as ITU-R BT.709 or ITU-R BT.1886 while the final color reproduction is performed on the TV display device of a consumer that often do not follow this standard precisely.

One first problem in proof viewing with respect to observer variability is that color reproduction standards such as ITU-R BT.709 are based on the CIE 1931 standard that do not precisely describe the individual visual system of a human observer. Solutions to this first problem are known. For example, by using the CIE 2006 model, color reproduction can be adapted to human observers of a specific age ensuring successful proof viewing. Another example is the method proposed in the document WO2011/124699 in which observers are classified into classes and a visual perception model is established for each class. By using the visual perception model of the class to which belongs an individual human observer, this document discloses how proof viewing can be individually adapted to this observer.

This invention addresses another issue concerning the following situations:

- a first situation where an observer A is proof viewing an image on a proof viewing image reproduction device that reproduces colors using a model of human color vision adapted to this observer A such that the reproduced colors are visually perceived as identical (within the precision of the proof viewing system) to the colors reproduced on a final image reproduction device;
- a second situation where an observer B - having an individual human color vision different from that of observer A - watches the same image on the proof viewing image reproduction device.

The issue is that, if observer B compares the colors of this image he perceives when reproduced on the proof viewing image reproduction device with the colors of the same image he perceives when reproduced on the final image reproduction device, he will now observe difference of color perception since the proof viewing system is not based on the human vision model for observer B.

Summary of invention

An aim of the invention is to solve the above issue by showing to observer A what are the colors that observer B actually perceives with visual color characteristics different from those of observer A.

For this purpose, the subject of the invention is a method for transforming in a color transformer a first version of a color to be reproduced by a proof viewing device a into a second version of the same color to be reproduced by the same proof viewing device in a way that a first human observer perceives this color reproduced on said proof viewing device according to said second version as this color is perceived on a final color reproduction device by at least one second human observer, said method comprising:

A/ Transforming device-dependent color coordinates adapted to control said proof viewing device P in order to reproduce said color according to said first version, into device-independent-and-observer-A-dependent color coordinates using a first color characterization model of said proof viewing device calibrated to the human visual characteristics of said first human observer;

B/ Transforming said device-independent-and-observer-A-dependent color coordinates into device-dependent-and-observer-A-dependent color coordinates using a second color characterization model of said final color reproduction device calibrated to the human visual characteristics of said first human observer;

C/ Transforming said device-dependent-and-observer-A-dependent color coordinates into device-independent-and-observer-B-dependent color coordinates using a third color characterization model for said final color reproduction device calibrated to the human visual characteristics of said second human observer which are different from the human visual characteristics of said first human observer;

D/ Transforming said device-independent-and-observer-B-dependent color coordinates into device-dependent-and-observer-B-dependent color coordinates using said first color characterization model, said device-dependent-and-observer-A-and-B-dependent color coordinates being adapted to control said proof viewing device in order to reproduce said color according to said second version.

Preferably, human vision characteristics of an observer is a set of three colour-matching functions specific to this observer, or related to a class of observers having similar human vision characteristics.

The subject of the invention is also a method of proof viewing an image on a proof viewing device by a first human observer, said image being intended to be viewed on a final color reproduction device by at least one second human observer having human visual characteristics different from those of the first observer, each color of said image being coded into device-dependent color coordinates adapted to control said proof viewing device in order to reproduce said color according to a first version, comprising :

- displaying said image on said proof viewing device using said colors as coded according to said first version;
- transforming the first version of each color into a second version of the same color according to the method of transforming of the invention,
- displaying said image on said proof viewing device using colors as transformed into said second version.

Thanks to the invention, when the first observer views on the same proof viewing device the two versions of the same image, he can compare his own perception of the colors of this image based on the first version and the second observer's perception of the same colors of this image based on the second version.

The subject of the invention is also a color transformer able to implement the invention, and a proof viewing system comprising a proof viewing device and this color transformer.

Brief description of drawings

The invention will be more clearly understood on reading the description which follows, given by way of non-limiting example and with reference to the appended figures in which:

- Figure 1, already mentioned, illustrates the well known set of CMFs of the CIE 10° standard observer;
- Figure 2 is a diagram illustrating a main embodiment of the method of transforming a first version of a color into a second version of this color and of a method of proof viewing the different versions of this color according to the invention;
- Figure 3 illustrates a first variant of the invention, differentiated from the main embodiment by the way the color characterization models are obtained;
- Figure 4 illustrates a second variant of the invention, differentiated from the main embodiment by another way the color characterization models are obtained.

Description of embodiments

The functions of the various elements described below and/or shown in the diagrams of the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. When provided by a software, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU.

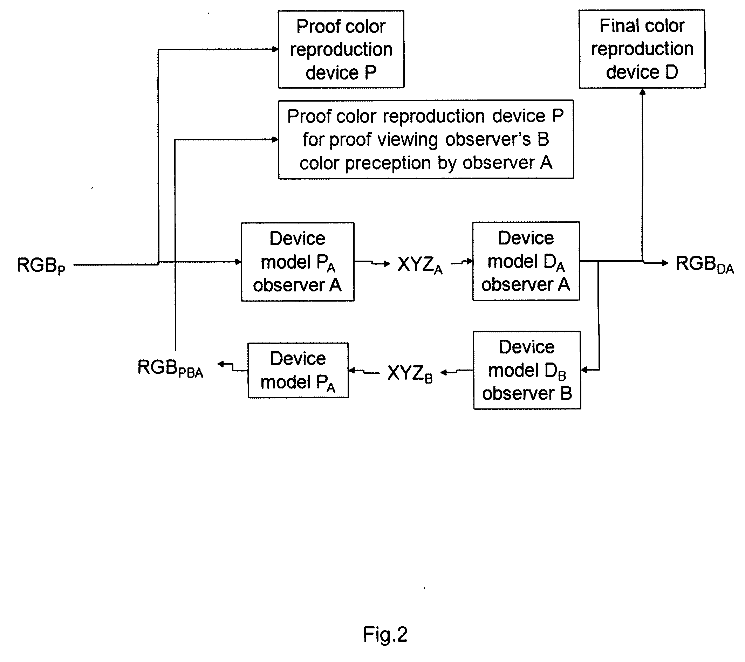

The main embodiment of the invention will now be described in the context of an imaging workflow called "proof viewing" in reference to figure 2. The invention is not limited to this context.

In such a workflow, an image is produced for a final color reproduction device D, as for example a TV set. The display of images by this final color reproduction device D is based on three primary colors having specific spectral distributions $R_D(\lambda)$, $G_D(\lambda)$, and $B_D(\lambda)$. The reproduction of a color on this display is obtained by applying corresponding device-dependent color coordinates $R_D$, $G_D$ and $B_D$ to this final color reproduction device D. This set of device-dependent color coordinates $R_D$, $G_D$ and $B_D$ represents this color in the device-dependent color space $RGB_D$ specific to this final color reproduction device D.

In such a workflow, produced images are proof viewed on a proof viewing device P, which is generally compliant with a color reproduction standard, for example ITU-R BT.709. The display of images by this proof viewing device P is based on three primary colors having specific spectral distributions $R_P(\lambda)$, $G_P(\lambda)$, and $B_P(\lambda)$. The display of a color is obtained by applying corresponding device-dependent color coordinates $R_P$, $G_P$ and $B_P$ to this proof viewing device P. This set of device-dependent color coordinates $R_P$, $G_P$ and $B_P$ represents this color in the device-dependent color space $RGB_P$ specific to this proof viewing device P.

Human visual characteristics A of a first observer can be represented by a first set of color matching functions $[x_A(\lambda), y_A(\lambda), z_A(\lambda)]$. Human visual characteristics B of a second observer, different from those of the first one, can be represented by a second set of color matching functions $[x_B(\lambda), y_B(\lambda), z_B(\lambda)]$.

Any given color stimulus having its own spectral distribution $C(\lambda)$ over the range of visible wavelength can be represented in a XYZ color space by device-independent-and-observer-A-dependent color coordinates $X_A$, $Y_A$ and $Z_A$ for the first observer, and by device-independent-and-observer-B-dependent color coordinates $X_B$, $Y_B$ and $Z_B$ for the second observer, wherein :

$$X_A = \int C(\lambda).x_A(\lambda).d\lambda \ ; \ Y_A = \int C(\lambda).y_A(\lambda).d\lambda \ ; \ Z_A = \int C(\lambda).z_A(\lambda).d\lambda \ ;$$

$$X_B = \int C(\lambda).x_B(\lambda).d\lambda \ ; \ Y_B = \int C(\lambda).y_B(\lambda).d\lambda \ ; \ Z_B = \int C(\lambda).z_B(\lambda).d\lambda \ ;$$

The difference between $X_A$, $Y_A$, $Z_A$ and $X_B$, $Y_B$, $Z_B$ represents, in the XYZ color space, the difference of perception of the same color stimulus $C(\lambda)$ between the first and the second observer.

On the opposite, let us assume that a given color C is displayed by the proof viewing device P by controlling it using $R_P$, $G_P$ and $B_P$ coordinates ; the displayed color will be perceived by the first observer A as a color represented in the XYZ color space by device-independent-and-observer-A-dependent color coordinates $X_A$, $Y_A$ and $Z_A$.

This proof viewing device P is considered as calibrated to the human visual characteristics A if a **first** color characterization model $M_{P-A}$ has been determined such that, from any color perceived by the observer having these visual characteristics A as having color coordinates $X_A$, $Y_A$ and $Z_A$ in the XYZ color space, the color coordinates $R_P$, $G_P$, $B_P$ adapted to control this proof viewing device P in order to display this color can be determined using this model $M_{P-A}$, such that $(R_P, G_P, B_P) = M_{P-A}(X_A, Y_A, Z_A)$. On the opposite, the inverse $M_{P-A}^{-1}$ of this **first** color characterization model allows to calculate the color coordinates $X_A$, $Y_A$ and $Z_A$ of a color reproduced by the proof viewing device P when it is controlled by the color coordinates $R_P$, $G_P$, $B_P$ and when this reproduced color is perceived by this observer, according to the equation : $(X_A, Y_A, Z_A) = M_{P-A}^{-1}(R_P, G_P, B_P)$.

In a similar way, let us assume that a given color C is displayed by the final color reproduction device D by controlling it using $R_D$, $G_D$ and $B_D$ coordinates ; the displayed color will be perceived by the second observer B as a color represented in the XYZ color space by device-independent-and-observer-B-dependent color coordinates $X_B$, $Y_B$ and $Z_B$.

The final color reproduction device D is considered as calibrated to the human visual characteristics A if a **second** color characterization model $M_{D-A}$ has been determined such that, from any color perceived by the observer having these visual characteristics A as having color coordinates $X_A$, $Y_A$ and $Z_A$ in the XYZ color space, the color coordinates $R_D$, $G_D$, $B_D$ that are adapted to control this final color reproduction device D in order to display this color can be determined using this model $M_{D-A}$, such that $(R_D, G_D, B_D) = M_{D-A}(X_A, Y_A, Z_A)$.

This final color reproduction device D is considered as calibrated to the human visual characteristics B if a **third** color characterization model $M_{D-B}$ has been determined such that, from any color perceived by the observer having these visual characteristics B as having color coordinates $X_B$, $Y_B$ and $Z_B$ in the XYZ color space, the color coordinates $R'_D$, $G'_D$, $B'_D$ that are adapted to control this final color reproduction device D in order to display this color can be determined using this model $M_{D-B}$, such that $(R'_D, G'_D, B'_D) = M_{D-B}(X_B, Y_B, Z_B)$. On the opposite, the inverse $M_{D-B}^{-1}$ of this **first** color characterization model allows to calculate the color coordinates $X_B$, $Y_B$ and $Z_B$ of a color reproduced by final color reproduction device D when it is controlled by the color coordinates $R'_D$, $G'_D$, $B'_D$ and when this reproduced color is perceived by this observer, according to the equation : $(X_B, Y_B, Z_B) = M_{D-B}^{-1}(R'_D, G'_D, B'_D)$

<u>1st step : displaying a first version of a color on the proof viewing device P</u>

Let us assume that, in the image to proofview by the first observer on the proof viewing device P, each color of this image is encoded into device-dependent color coordinates $R_P$, $G_P$ and $B_P$ that are adapted to control the proof viewing device P to get a reproduction of this color.

Then, in this first step, a first version of the image under production is proofviewed by the first observer on the proof viewing device P.

2<u>nd</u> step : displaying this color on the final color reproduction device D

To be able to reproduce this image on the final color reproduction device D such that the first observer perceives the same colors as reproduced above on the proof viewing device P, two successive color transformations should be performed for each color of this image :

A/ Transforming the device-dependent color coordinates $R_P$, $G_P$ and $B_P$ of this color into device-independent-and-observer-A-dependent color coordinates $X_A$, $Y_A$, $Z_A$ using the inverse of the first color characterization model $M_{P-A}$ as defined above, such that: $(X_A, Y_A, Z_A) = M_{P-A}^{-1}(R_P, G_P, B_P)$.

B/ Transforming the device-independent-and-observer-A-dependent color coordinates $X_A$, $Y_A$, $Z_A$ into device-dependent-and-observer-A-dependent color coordinates $R_D$, $G_D$, $B_D$ using the second color characterization model $M_{D-A}$, as defined above, such that: $(R_D, G_D, B_D) = M_{D-A} (X_A, Y_A, Z_A)$. Then, these device-dependent-and-observer-A-dependent color coordinates $R_D$, $G_D$, $B_D$ are used to control the final color reproduction device D, then providing another reproduction of the color. If the color $(X_A, Y_A, Z_A)$ is outside of the gamut of the device D, known methods might be used such as gamut alarm (showing a white instead of the color) or gamut mapping (showing another color that is close to the color but inside the color gamut).

When such transformations are applied to each color, the image is reproduced on the final color reproduction device such that the first observer perceives the colors reproduced by the final color reproduction device D as the same colors as the colors reproduced in step 1 on the proof viewing device P, except for colors outside the gamut of device D.

3<u>rd</u> step : displaying a second version of this color on the proof viewing device P

To be able to reproduce this image again, as a second version, on the proof viewing device P such that the first observer perceives the colors of this image as they are perceived by the second observer when viewing the colors as reproduced above on the final color reproduction device D, two other successive color transformations should be performed for each color of this image :

C/ Transforming the device-dependent-and-observer-A-dependent color coordinates $R_D$, $G_D$, $B_D$ into device-independent-and-observer-B-dependent color coordinates $X_B$, $Y_B$, $Z_B$ using the inverse of the third color characterization model $M_{D-B}$ such that $(X_B, Y_B, Z_B) = M_{D-B}^{-1}(R_D, G_D, B_D)$ ;

D/ Transforming the device-independent-and-observer-B-dependent color coordinates $X_B$, $Y_B$, $Z_B$ into device-dependent-and-observer-A-and-B-dependent color coordinates $R_{PBA}$, $G_{PBA}$, $B_{PBA}$ using the first color characterization model such that $(R_{PBA}, G_{PBA}, B_{PBA}) = M_{P-A} (X_B, Y_B, Z_B)$. If the color $(X_B, Y_B, Z_B)$ is outside of the gamut of the device P, known methods might be used such as gamut alarm or gamut mapping.

When such transformations are applied to each color, a second version of the image is reproduced on the proof viewing device using these color coordinates $R_{PBA}$, $G_{PBA}$, $B_{PBA}$ to control this device, such that the first observer perceives the colors reproduced by the final color reproduction device D as the second observer perceives these colors, except for colors out of the gamut of one of the displays P and D.

All steps of color transformations A/ to D/ above are illustrated on figure 2.

If all colors of an image are coded into device-dependent color coordinates adapted to control the proof viewing device P in order to be reproduced according to a first version, these colors make a first version of this image.

If all colors are transformed according to the method above into a second version, these colors make a second version of this image.

Both versions of the image can be reproduced simultaneously side by side or successively on the proof viewing device P in order to allow the first observer to compare his own perception of the colors of this image based on the first version and the second observer's perception of the same colors of this image based on the second version.

Without departing from the invention, from the same first version of each color of the image, a third, fourth, fifth, ... version of this color can be obtained by the same method, the third, fourth, fifth, ... version being respectively based on the perception of this color as displayed on the final color reproduction device D and as perceived respectively by a third, fourth, fifth, ... observer having respectively their own human color vision characteristics.

Similarly, all versions of the image can be reproduced simultaneously side by side or successively on the proof viewing device P in order to allow the first observer to compare his own perception of the colors of this image based on the first version and all the other observer's perception of the same colors of this image based on the other versions.

The invention advantageously improves the workflow of image production.

Without departing from the invention, the color characterization models of the proof viewing device P for the first observer and of the final color reproduction device D for both observer can be obtained by using :

- color measurement instruments calibrated for a standard CIE-1931 observer, providing device-independent-and-observer-CIE-dependent color coordinates X, Y, Z allowing to derive color characterization models of the proof viewing device P for a CIE-1931observer and of the final color reproduction device D for a CIE-1931observer;
- color transforms that are able to transform device-independent-and-observer-CIE-dependent color coordinates X, Y, Z into device-independent-and-observer-A-dependent color coordinates $X_A$, $Y_A$, $Z_A$ and into device-independent-and-observer-B-dependent color coordinates $X_B$, $Y_B$, $Z_B$, and vice-versa, allowing to derive color characterization models of the proof viewing device P for the first observer and of the final color reproduction device D for both observers from color characterization models of the proof viewing device P for a CIE-1931observer and of the final color reproduction device D for a CIE-1931 observer.

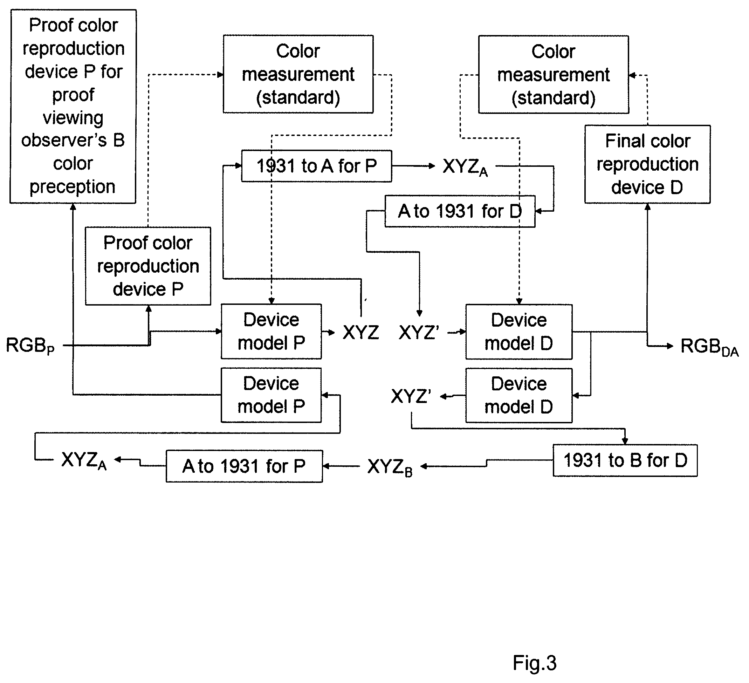

A diagram of such a first variant of the invention is shown on figure 3. For example, the color characterization model of the proof viewing device P able to transform the device-dependent color coordinates $R_P$, $G_P$ and $B_P$ into device-independent-and-observer-CIE-dependent color coordinates X, Y, Z is followed by a color transform able to transform device-independent-and-observer-CIE-dependent color coordinates X, Y, Z into device-independent-and-observer-A-dependent color coordinates $X_A$, $Y_A$, $Z_A$. This latter transform is hereby device P specific since the transform of X, Y, Z into $X_A$, $Y_A$, $Z_A$ is valid only for the spectra that the display P emits when controlled by the coordinates $R_P$,$G_P$,$B_P$. The advantage of the use of such a transform is that the device model itself - in this example the device P model - can be established as commonly the case in today's industry using the CIE 1931 XYZ coordinates.

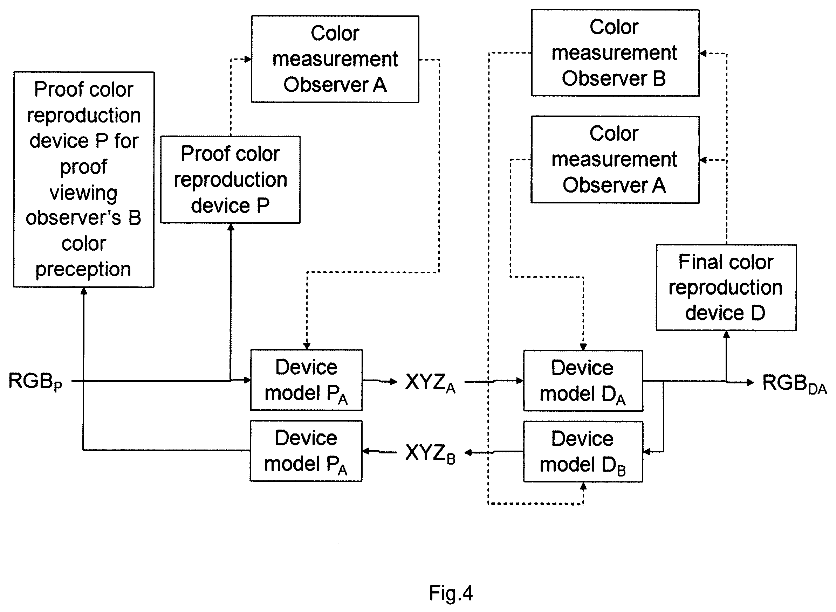

In another variant shown on figure 4, without departing from the invention, the color characterization models of the proof viewing device P for the first observer and of the final color reproduction device D for both observer can be obtained by using :

- color measurement instruments calibrated either for the first observer A or for the observer B, respectively, providing device-independent-and-observer-A-or-B-dependent color coordinates $X_A$, $Y_A$, $Z_A$ or $X_B$, $Y_B$, $Z_B$, respectively, allowing to derive color characterization models of the proof viewing device P for observer A as well as to derive color characterization models of the final viewing device D for observer A and for observer B, respectively.

An advantage of this last variant is a higher precision - since the observer models are directly considered for the measurement - and the reduced complexity - since no additional color transforms are required. Disadvantage is that this variant does not make use of the CIE 1931 standard observer and thus is not directly compatible to systems based on the CIE 1931 standard observer.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skilled in the art. It is to be understood that the invention may be implemented in various forms of hardware, software, firmware, special purpose processors, or combinations thereof.

**Claims**

1. Method for transforming in a color transformer a first version of a color to be reproduced by a proof viewing device (P) a into a second version of the same color to be reproduced by the same proof viewing device (P) in a way that a first human observer perceives this color reproduced on said proof viewing device (P) according to said second version as this color is perceived on a final color reproduction device (D) by at least one second human observer, said method comprising:

   A/ Transforming device-dependent color coordinates ($R_P$,$G_P$,$B_P$) adapted to control said proof viewing device P in order to reproduce said color according to said first version, into device-independent-and-observer-A-dependent color coordinates ($X_A$,$Y_A$,$Z_A$) using a first color characterization model ($M_{P-A}$) of said proof viewing device (P) calibrated to the human visual characteristics (A) of said first human observer;
   B/ Transforming said device-independent-and-observer-A-dependent color coordinates ($X_A$,$Y_A$,$Z_A$) into device-dependent-and-observer-A-dependent color coordinates ($R_D$,$G_D$,$B_D$) using a second color characterization model ($M_{D-A}$) of said final color reproduction device (D) calibrated to the human visual characteristics (A) of said first human observer;
   C/ Transforming said device-dependent-and-observer-A-dependent color coordinates ($R_D$,$G_D$,$B_D$) into device-independent-and-observer-B-dependent color coordinates $(X_B,Y_B,Z_B)$ using a third color characterization model $(M_{D-B})$ for said final color reproduction device (D) calibrated to the human visual characteristics (B) of said second human observer which are different from the human visual characteristics (A) of said first human observer;

D/ Transforming said device-independent-and-observer-B-dependent color coordinates $(X_B,Y_B,Z_B)$ into device-dependent-and-observer-B-dependent color coordinates $(R_{PB},G_{PB},B_{PB})$ using said first color characterization model $(M_{P-A})$, said device-dependent-and-observer-A-and-B-dependent color coordinates $(R_{PBA},G_{PBA},B_{PBA})$ being adapted to control said proof viewing device (P) in order to reproduce said color according to said second version.

2. Method of proof viewing an image on a proof viewing device (P) by a first human observer, said image being intended to be viewed on a final color reproduction device (D) by at least one second human observer having human visual characteristics different from those of the first observer, each color of said image being coded into device-dependent color coordinates $(R_P,G_P,B_P)$ adapted to control said proof viewing device P in order to reproduce said color according to a first version, comprising :

- displaying said image on said proof viewing device (P) using said colors as coded according to said first version;
- transforming the first version of each color into a second version of the same color according to the method of claim 1,
- displaying said image on said proof viewing device (P) using colors as transformed into said second version.

3. Color transformer for transforming a first version of a color to be reproduced by a proof viewing device (P) a into a second version of the same color to be reproduced by the same proof viewing device (P) in a way that a first human observer perceives this color reproduced on said proof viewing device (P) according to said second version as this color is perceived on a final color reproduction device (D) by at least one second human observer, said method comprising:

A/ Means for transforming device-dependent color coordinates $(R_P,G_P,B_P)$ adapted to control said proof viewing device P in order to reproduce said color according to said first version, into device-independent-and-observer-A-dependent color coordinates $(X_A,Y_A,Z_A)$ using a first color characterization model $(M_{P-A})$ of said proof viewing device (P) calibrated to the human visual characteristics (A) of said first human observer;

B/ Means for transforming said device-independent-and-observer-A-dependent color coordinates $(X_A,Y_A,Z_A)$ into device-dependent-and-observer-A-dependent color coordinates $(R_D,G_D,B_D)$ using a second color characterization model $(M_{D-A})$ of said final color reproduction device (D) calibrated to the human visual characteristics (A) of said first human observer;

C/ Means for transforming said device-dependent-and-observer-A-dependent color coordinates $(R_D,G_D,B_D)$ into device-independent-and-observer-B-dependent color coordinates $(X_B,Y_B,Z_B)$ using a third color characterization model $(M_{D-B})$ for said final color reproduction device (D) calibrated to the human visual characteristics (B) of said second human observer which are different from the human visual characteristics (A) of said first human observer;

D/ Means for transforming said device-independent-and-observer-B-dependent color coordinates $(X_B,Y_B,Z_B)$ into device-dependent-and-observer-B-dependent color coordinates $(R_{PB},G_{PB},B_{PB})$ using said first color characterization model $(M_{P-A})$, said device-dependent-and-observer-A-and-B-dependent color coordinates $(R_{PBA},G_{PBA},B_{PBA})$ being adapted to control said proof viewing device (P) in order to reproduce said color according to said second version.

4. Proof viewing system comprising a proof viewing device (P) and a color transformer according to claim 3.

**Patentansprüche**

1. Verfahren zum Transformieren einer ersten Version einer Farbe, die durch eine Korrekturabzugs-Betrachtungsvorrichtung (P) wiedergegeben werden soll, in eine zweite Version derselben Farbe, die durch dieselbe Korrekturabzugs-Betrachtungsvorrichtung (P) wiedergegeben werden soll, in einer Farbtransformationseinrichtung in einer Weise, dass ein erster menschlicher Betrachter diese auf der Korrekturabzugs-Betrachtungsvorrichtung (P) wiedergegebene Farbe in Übereinstimmung mit der zweiten Version wahrnimmt, während diese Farbe auf einer abschließenden Farbwiedergabevorrichtung (D) durch mindestens einen zweiten menschlichen Betrachter wahrgenommen wird, wobei das Verfahren Folgendes umfasst:

A) Transformieren vorrichtungsabhängiger Farbkoordinaten ($R_P$, $G_P$, $B_P$), die dafür ausgelegt sind, die Korrekturabzugs-Wiedergabevorrichtung (P) dafür zu steuern, dass sie die Farbe in Übereinstimmung mit der ersten Version wiedergibt, in vorrichtungsunabhängige und von dem Betrachter A abhängige Farbkoordinaten ($X_A$, $Y_A$, $Z_A$), unter Verwendung eines ersten Farbcharakterisierungsmodells ($M_{P-A}$) der Korrekturabzugs-Betrachtungsvorrichtung (P), die auf die Eigenschaften (A) des menschlichen Sehens des ersten menschlichen Betrachters kalibriert ist;

B) Transformieren der vorrichtungsunabhängigen und von dem Betrachter A abhängigen Farbkoordinaten ($X_A$, $Y_A$, $Z_A$) in vorrichtungsabhängige und von dem Betrachter A abhängige Farbkoordinaten ($R_D$, $G_D$, $B_D$) unter Verwendung eines zweiten Farbcharakterisierungsmodells ($M_{D-A}$) der abschließenden Farbwiedergabevorrichtung (D), die auf die Eigenschaften (A) des menschlichen Sehens des ersten menschlichen Betrachters kalibriert ist;

C) Transformieren der vorrichtungsabhängigen und von dem Betrachter A abhängigen Farbkoordinaten ($R_D$, $G_D$, $B_D$) in vorrichtungsunabhängige und von dem Betrachter B abhängige Farbkoordinaten ($X_B$, $Y_B$, $Z_B$) unter Verwendung eines dritten Farbcharakterisierungsmodells ($M_{D-B}$) für die abschließende Farbwiedergabevorrichtung (D), die für die Eigenschaften (B) des menschlichen Sehens des zweiten menschlichen Betrachters, die von den Eigenschaften (A) des menschlichen Sehens des ersten menschlichen Betrachters verschieden sind, kalibriert ist;

D) Transformieren der vorrichtungsunabhängigen und von dem Betrachter B abhängigen Farbkoordinaten ($X_B$, $Y_B$, $Z_B$) in vorrichtungsabhängige und von dem Betrachter B abhängige Farbkoordinaten ($R_{PB}$, $G_{PB}$, $B_{PB}$) unter Verwendung des ersten Farbcharakterisierungsmodells ($M_{P-A}$), wobei die vorrichtungsabhängigen und von den Betrachtern A und B abhängigen Farbkoordinaten ($R_{PBA}$, $G_{PBA}$, $B_{PBA}$) dafür ausgelegt sind, die Korrekturabzugs-Betrachtungsvorrichtung (P) dafür zu steuern, dass sie die Farbe in Übereinstimmung mit der zweiten Version widergibt.

2. Verfahren zum Betrachten eines Korrekturabzugs eines Bilds auf einer Korrekturabzugs-Betrachtungsvorrichtung (P) durch einen ersten menschlichen Betrachter, wobei das Bild dafür bestimmt ist, auf einer abschließenden Farbwiedergabevorrichtung (D) durch mindestens einen zweiten menschlichen Betrachter betrachtet zu werden, dessen Eigenschaften des menschlichen Sehens sich von jenen des ersten Betrachters unterscheiden, wobei jede Farbe des Bilds in vorrichtungsabhängige Farbkoordinaten ($R_P$, $G_P$, $B_P$) codiert wird, die dafür ausgelegt sind, die Korrekturabzugs-Betrachtungsvorrichtung P dafür zu steuern, dass sie die Farbe in Übereinstimmung mit einer ersten Version wiedergibt, wobei das Verfahren umfasst:

- Anzeigen des Bilds auf der Korrekturabzugs-Betrachtungsvorrichtung (P) unter Verwendung der Farben, wie sie in Übereinstimmung mit der ersten Version codiert sind;
- Transformieren der ersten Version jeder Farbe in eine zweite Version derselben Farbe in Übereinstimmung mit dem Verfahren nach Anspruch 1,
- Anzeigen der Farbe auf der Korrekturabzugs-Betrachtungsvorrichtung (P) unter Verwendung von Farben, wie sie in die zweite Version transformiert sind.

3. Farbtransformationseinrichtung zum Transformieren einer ersten Version einer Farbe, die durch eine Korrekturabzugs-Betrachtungsvorrichtung (P) wiedergegeben werden soll, in eine zweite Version derselben Farbe, die durch dieselbe Korrekturabzugs-Betrachtungsvorrichtung (P) wiedergegeben werden soll, in einer Weise, dass ein erster menschlicher Betrachter diese auf der Korrekturabzugs-Betrachtungsvorrichtung (P) wiedergegebene Farbe in Übereinstimmung mit der zweiten Version wahrnimmt, während diese Farbe auf einer abschließenden Farbwiedergabevorrichtung (D) durch mindestens einen zweiten menschlichen Betrachter wahrgenommen wird, wobei das Verfahren Folgendes umfasst:

A) Mittel zum Transformieren vorrichtungsabhängiger Farbkoordinaten ($R_P$, $G_P$, $B_P$), die dafür ausgelegt sind, die Korrekturabzugs-Wiedergabevorrichtung (P) dafür zu steuern, dass sie die Farbe in Übereinstimmung mit der ersten Version wiedergibt, in vorrichtungsunabhängige und von dem Betrachter A abhängige Farbkoordinaten ($X_A$, $Y_A$, $Z_A$), unter Verwendung eines ersten Farbcharakterisierungsmodells ($M_{P-A}$) der Korrekturabzugs-Betrachtungsvorrichtung (P), die auf die Eigenschaften (A) des menschlichen Sehens des ersten menschlichen Betrachters kalibriert ist;

B) Mittel zum Transformieren der vorrichtungsunabhängigen und von dem Betrachter A abhängigen Farbkoordinaten ($X_A$, $Y_A$, $Z_A$) in vorrichtungsabhängige und von dem Betrachter A abhängige Farbkoordinaten ($R_D$, $G_D$, $B_D$) unter Verwendung eines zweiten Farbcharakterisierungsmodells ($M_{D-A}$) der abschließenden Farbwiedergabevorrichtung (D), die auf die Eigenschaften (A) des menschlichen Sehens des ersten menschlichen Betrachters kalibriert ist;

C) Mittel zum Transformieren der vorrichtungsabhängigen und von dem Betrachter A abhängigen Farbkoordinaten ($R_D$, $G_D$, $B_D$) in vorrichtungsunabhängige und von dem Betrachter B abhängige Farbkoordinaten ($X_B$, $Y_B$, $Z_B$) unter Verwendung eines dritten Farbcharakterisierungsmodells ($M_{D-B}$) für die abschließende Farbwiedergabevorrichtung (D), die für die Eigenschaften (B) des menschlichen Sehens des zweiten menschlichen Betrachters, die von den Eigenschaften (A) des menschlichen Sehens des ersten menschlichen Betrachters verschieden sind, kalibriert ist;

D) Mittel zum Transformieren der vorrichtungsunabhängigen und von dem Betrachter B abhängigen Farbkoordinaten ($X_B$, $Y_B$, $Z_B$) in vorrichtungsabhängige und von dem Betrachter B abhängige Farbkoordinaten ($R_{PB}$, $G_{PB}$, $B_{PB}$) unter Verwendung des ersten Farbcharakterisierungsmodells ($M_{P-A}$), wobei die vorrichtungsabhängigen und von den Betrachtern A und B abhängigen Farbkoordinaten ($R_{PBA}$, $G_{PBA}$, $B_{PBA}$) dafür ausgelegt sind, die Korrekturabzugs-Betrachtungsvorrichtung (P) dafür zu steuern, dass sie die Farbe in Übereinstimmung mit der zweiten Version wiedergibt.

4. Korrekturabzugs-Betrachtungssystem, das eine Korrekturabzugs-Betrachtungsvorrichtung (P) und eine Farbtransformationseinrichtung nach Anspruch 3 umfasst.

## Revendications

1. Procédé de transformation dans un transformateur de couleurs de la première version d'une couleur à reproduire par un dispositif d'aperçu de visualisation (P) en une deuxième version de la même couleur à reproduire par le même dispositif d'aperçu de visualisation (P) de sorte qu'un premier observateur humain perçoive cette couleur, reproduite sur ledit dispositif d'aperçu de visualisation (P) selon ladite deuxième version, comme cette couleur est perçue sur un dispositif de reproduction de la couleur finale (D) par au moins un deuxième observateur humain, ledit procédé comprenant :

A/ une transformation des coordonnées de couleur dépendantes d'un dispositif ($R_P$,$G_P$,$B_P$) adaptées au contrôle dudit dispositif d'aperçu de visualisation P pour reproduire ladite couleur selon ladite première version, en coordonnées de couleur indépendantes d'un dispositif et dépendantes de l'observateur A ($X_A$,$Y_A$,$Z_A$) à l'aide d'un premier modèle de caractérisation de couleurs ($M_{P-A}$) dudit dispositif d'aperçu de visualisation (P) étalonné en fonction des caractéristiques visuelles humaines (A) dudit premier observateur humain ;

B/ une transformation desdites coordonnées de couleur indépendantes du dispositif et dépendantes de l'observateur A ($X_A$,$Y_A$,$Z_A$) en coordonnées de couleur dépendantes d'un dispositif et de l'observateur A ($R_D$,$G_D$, $B_D$) à l'aide d'un deuxième modèle de caractérisation de couleurs ($M_{D-A}$) dudit dispositif de reproduction de la couleur finale (D) étalonné en fonction des caractéristiques visuelles humaines (A) dudit premier observateur humain ;

C/ une transformation desdites coordonnées de couleur dépendantes du dispositif et de l'observateur A ($R_D$, $G_D$,$B_D$) en coordonnées de couleur indépendantes d'un dispositif et dépendantes de l'observateur B ($X_B$,$Y_B$, $Z_B$) à l'aide d'un troisième modèle de caractérisation de couleurs ($M_{D-B}$) pour ledit dispositif de reproduction de la couleur finale (D) étalonné en fonction des caractéristiques visuelles humaines (B) dudit deuxième observateur humain qui sont différentes des caractéristiques visuelles humaines (A) dudit premier observateur humain ;

D/ une transformation desdites coordonnées de couleur indépendantes du dispositif et dépendantes de l'observateur B ($X_B$,$Y_B$,$Z_B$) en coordonnées de couleur dépendantes d'un dispositif et de l'observateur B ($R_{PB}$,$G_{PB}$, $B_{PB}$) à l'aide dudit premier modèle de caractérisation de couleurs ($M_{P-A}$), lesdites coordonnées de couleur dépendantes d'un dispositif et des observateurs A et B ($R_{PBA}$,$G_{PBA}$,$B_{PBA}$) étant adaptées pour contrôler ledit dispositif d'aperçu de visualisation (P) afin de reproduire ladite couleur selon ladite deuxième version.

2. Procédé d'aperçu de visualisation d'une image sur un dispositif d'aperçu de visualisation (P) par un premier observateur humain, ladite image étant destinée à être visualisée, sur un dispositif de reproduction de la couleur finale (D), par au moins un deuxième observateur humain disposant de caractéristiques visuelles humaines différentes de celles du premier observateur, chaque couleur de ladite image étant codée dans des coordonnées de couleur dépendantes d'un dispositif ($R_P$,$G_P$,$B_P$) adaptées au contrôle dudit dispositif d'aperçu de visualisation P afin de reproduire ladite couleur selon une première version, comprenant :

- un affichage de ladite image sur ledit dispositif d'aperçu de visualisation (P) en utilisant lesdites couleurs telles que codées selon ladite première version ;
- une transformation de la première version de chaque couleur en une deuxième version de la même couleur en fonction du procédé de la revendication 1,

- un affichage de ladite image sur ledit dispositif d'aperçu de visualisation (P) en utilisant des couleurs telles que transformées en ladite deuxième version.

3. Transformateur de couleur pour la transformation d'une première version d'une couleur à reproduire par un dispositif d'aperçu de visualisation (P) en une deuxième version de la même couleur à reproduire par le même dispositif d'aperçu de visualisation (P) de sorte qu'un premier observateur humain perçoive cette couleur, reproduite sur ledit dispositif d'aperçu de visualisation (P) selon ladite deuxième version, comme cette couleur est perçue sur un dispositif de reproduction de la couleur finale (D) par au moins un deuxième observateur humain, ledit procédé comprenant :

A/ des moyens de transformation des coordonnées de couleur dépendantes d'un dispositif $(R_P,G_P,B_P)$ adaptées au contrôle dudit dispositif d'aperçu de visualisation P pour reproduire ladite couleur selon ladite première version, en coordonnées de couleur indépendantes d'un dispositif et dépendantes de l'observateur A $(X_A,Y_A,Z_A)$ à l'aide d'un premier modèle de caractérisation de couleurs $(M_{P-A})$ dudit dispositif d'aperçu de visualisation (P) étalonné en fonction des caractéristiques visuelles humaines (A) dudit premier observateur humain ;
B/ des moyens de transformation desdites coordonnées de couleur indépendantes du dispositif et dépendantes de l'observateur A $(X_A,Y_A,Z_A)$ en coordonnées de couleur dépendantes d'un dispositif et de l'observateur A $(R_D,G_D,B_D)$ à l'aide d'un deuxième modèle de caractérisation de couleurs $(M_{D-A})$ dudit dispositif de reproduction de la couleur finale (D) étalonné en fonction des caractéristiques visuelles humaines (A) dudit premier observateur humain ;
C/ des moyens de transformation desdites coordonnées de couleur dépendantes du dispositif et de l'observateur A $(R_D,G_D,B_D)$ en coordonnées de couleur indépendantes d'un dispositif et dépendantes de l'observateur B $(X_B,Y_B,Z_B)$ à l'aide d'un troisième modèle de caractérisation de couleurs $(M_{D-B})$ pour ledit dispositif de reproduction de la couleur finale (D) étalonné en fonction des caractéristiques visuelles humaines (B) dudit deuxième observateur humain qui sont différentes des caractéristiques visuelles humaines (A) dudit premier observateur humain ;
D/ des moyens de transformation desdites coordonnées de couleur indépendantes du dispositif et dépendantes de l'observateur B $(X_B,Y_B,Z_B)$ en coordonnées de couleur dépendantes d'un dispositif et de l'observateur B $(R_{PB},G_{PB},B_{PB})$ à l'aide dudit premier modèle de caractérisation de couleurs $(M_{P-A})$, lesdites coordonnées de couleur dépendantes d'un dispositif et des observateurs A et B $(RP_{BA},G_{PBA},B_{PBA})$ étant adaptées pour contrôler ledit dispositif d'aperçu de visualisation (P) afin de reproduire ladite couleur selon ladite deuxième version.

4. Système d'aperçu de visualisation comprenant un dispositif d'aperçu de visualisation (P) et un transformateur de couleurs selon la revendication 3.

1964 10° Standard Observer

Fig.1

```
                    ┌─────────────┐              ┌─────────────┐
                    │ Proof color │              │ Final color │
              ┌────→│reproduction │              │reproduction │
              │     │  device P   │              │  device D   │
              │     └─────────────┘              └─────────────┘
              │     ┌───────────────────────────┐        ↑
              │     │Proof color reproduction    │        │
              │  ┌─→│device P                    │        │
              │  │  │for proof viewing observer's B       │
              │  │  │color preception by observer A       │
              │  │  └───────────────────────────┘
              │  │  ┌─────────┐          ┌─────────┐
              │  │  │ Device  │          │ Device  │
              │  │  │model Pₐ │→ XYZₐ →  │model Dₐ │→ RGB_DA
RGB_P ────────┴──┴─→│observer A│          │observer A│
              │                          └─────────┘
              │     ┌─────────┐          ┌─────────┐
              │     │ Device  │          │ Device  │
 RGB_PBA ←────┴─────│model Pₐ │← XYZ_B ← │model D_B│
                    └─────────┘          │observer B│
                                         └─────────┘
```

Fig.2

Fig.3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011124699 A